# EUROPÄISCHE PATENTSCHRIFT

(11) **EP 3 416 783 B1**
(45) Veröffentlichungstag und Bekanntmachung des Hinweises auf die Patenterteilung: **12.02.2020**
(21) Anmeldenummer: 17705865.8
(22) Anmeldetag: 16.02.2017
(51) Int. Cl.: B25B 27/10, F15B 7/02, B25F 5/00, B23P 19/027, B25B 7/12, F15B 7/08

(54) **VORRICHTUNG UND VERFAHREN ZUM ÜBERSETZEN EINER MECHANISCHEN KRAFT ZUM ANTREIBEN EINER PRESSVORRICHTUNG FÜR PRESSFITTINGS**
DEVICE AND METHOD FOR TRANSMITTING A MECHANICAL FORCE FOR DRIVING A PRESSING DEVICE FOR PRESS FITTINGS
DISPOSITIF ET PROCÉDÉ DE CONVERSION D'UNE FORCE MÉCANIQUE POUR L'ENTRAÎNEMENT D'UN DISPOSITIF DE COMPRESSION DE RACCORDS À COMPRESSION

(30) Priorität: 19.02.2016 DE 102016102960
(43) Veröffentlichungstag der Anmeldung: 26.12.2018
(73) Patentinhaber: Viega Technology GmbH & Co. KG, 57439 Attendorn (DE)
(72) Erfinder: RISCHEN, Christian, 59889 Eslohne (DE); ROSENTHAL, Jörg, 51580 Reichshof-Eckenhagen (DE); GRÜNKEMEIER, Uwe, Kaarst 41564 (DE)
(74) Vertreter: Cohausz & Florack
(86) Internationale Anmeldenummer: PCT/EP2017/053508
(87) Internationale Veröffentlichungsnummer: WO 2017/140785

(56) Entgegenhaltungen:
- EP-A1- 2 835 540
- EP-A2- 1 270 959
- EP-A2- 2 883 658
- WO-A1-2016/010656
- US-A- 4 151 720
- US-A1- 2010 078 931

## Beschreibung

Die Erfindung betrifft eine Vorrichtung und ein Verfahren zum Übersetzen einer mechanischen Kraft zum Antreiben einer Pressvorrichtung für Pressfittings.

Pressfittings werden für das Verbinden von Rohren und/oder Armaturen verwendet, wobei durch Kaltumformung des Fittings und mit Hilfe einer Dichtung eine dauerhaft verpresste und ggf. unlösbare Verbindung zwischen dem Fitting und dem Rohr und/oder der Armatur hergestellt werden kann. Daneben sind auch rein metallische Verbindungen bekannt, bei denen der Fitting und ein Teil des zu verbindenden Rohres und/oder Armatur umgeformt werden.

Für das Verpressen des Pressfittings werden Presswerkzeuge eingesetzt, die eine hydraulisch oder elektrischmechanisch erzeugte lineare Kraft in eine Schwenkbewegung von zwei zueinander beweglichen Pressbacken umwandelt. Dazu können zum einen direkt mit dem Presswerkzeug verbundene Pressbacken vorgesehen sein, die an den Pressfitting angelegt werden und diesen dann durch ein Zusammendrücken verpressen. Zum anderen können insbesondere bei größeren Abmessungen des Pressfittings eine Pressschlinge aus mindestens zwei Segmenten und zwei mit dem Presswerkzeug verbundene Pressbacken vorgesehen sein, die die Segmente der Pressschlinge zusammendrücken und somit den Pressfitting verpressen.

Pressfittings für Rohre mit großen Abmessungen von beispielsweise mehr als 50 mm bis zu mehr als 150 mm Außendurchmesser benötigen beim Verpressen jedoch sowohl eine große Presskraft als auch einen großen Pressweg. Nur so lassen sich Fittings mit den zu verbindenden Rohren ausreichend umformen und zuverlässige Verbindungen herstellen.

Der Arbeitsbedarf zur Umformung eines solch großen Pressfittings übersteigt dabei häufig das Arbeitsvermögen der marktüblichen Pressmaschinen, die beispielsweise in der Lage sind, eine Arbeit von 32kN ^{∗} 40 mm Hub oder 45kN ^{∗} 45mm Hub zu leisten. Dementsprechend ist es bei großen Abmessungen nicht möglich, den Pressfitting durch einen einzigen Pressmaschinenhub zu verpressen. Ein mehrfaches Ansetzen der Pressmaschine führt zu einem zwischenzeitlichen Verlust der Presskraft und somit der elastischen Vorspannung am Pressring, wodurch der Pressvorgang insgesamt verschlechtert wird.

Aus dem Stand der Technik der EP 2 522 464 B1 ist eine Zwei-Hub Zugbacke bekannt, um diesem Problem zu begegnen. Jedoch ist der Aufbau der Zwei-Hub-Zugbacken komplex und daher schwierig in die Serienfertigung und Baustellenanwendung übertragbar. Darüber hinaus geht bei diesem System ebenfalls die elastische Vorspannung des Pressrings und der Zugbacke zwischen dem ersten und dem zweiten Pressmaschinenhub verloren. Entsprechend weniger Arbeitsvermögen steht für die Gesamtumformung zur Verfügung.

In der US 2010 / 078931 A1 ist ein Werkzeug zum Lösen von Schnellverschlussverbindungen offenbart, wobei die Verbindung mittels zweier Finger auseinander gedrückt wird.

Aus der EP 2 835 540 A1 ist ein Hydraulikantrieb mit Kolben, Tank, Pumpe und Ventilen bekannt, der abstoppbar ist

In der US 4 151 720 ist ein hydraulischer Aktuator beschrieben, der hydraulische Kräfte für Werkzeuge wie Litzenleiter, Schneidevorrichtungen oder dergleichen entwickelt.

Aus der WO 2016 / 010656 A1 ist ein Hydrauliksystem für unter anderem Crimpwerkzeuge bekannt, wobei der Hydraulikzylinder oder -Kolben schnell ausgefahren werden kann.

Daher liegt der vorliegenden Erfindung das technische Problem zugrunde, das Verpressen von großen Pressfittings zu verbessern.

Das zuvor aufgeführte technische Problem wird erfindungsgemäß durch eine Vorrichtung zum Übersetzen einer mechanischen Kraft zum Antreiben einer Pressvorrichtung für Pressfittings mit den Merkmalen des Anspruchs 1 gelöst.

Erfindungsgemäß wird eine Vorrichtung als hydraulischer Kraftübersetzer vorgeschlagen, der zwischen der Pressmaschine und den zu verschwenkenden Pressbacken angeordnet ist. Die Vorrichtung ist versehen mit einem Vorratsbehälter für Hydraulikflüssigkeit, mit einem einen Pumpkolben aufweisenden Pumpzylinder, mit einem einen Arbeitskolben aufweisenden Arbeitszylinder, mit einer ersten Leitung zum Verbinden des Vorratsbehälters mit dem Pumpzylinder, mit einer zweiten Leitung zum Verbinden des Pumpzylinders mit dem Arbeitszylinder und mit einer dritten Leitung zum Verbinden des Arbeitszylinders mit dem Vorratsbehälter, wobei in der ersten Leitung Mittel zum Verhindern eines Rückflusses von Hydraulikflüssigkeit vom Pumpzylinder in den Vorratsbehälter vorgesehen sind, wobei in der zweiten Leitung Mittel zum Verhindern eines Rückflusses von Hydraulikflüssigkeit vom Arbeitszylinder in den Pumpzylinder vorgesehen sind, wobei Schaltmittel zum Öffnen und Schließen der dritten Leitung vorgesehen sind und wobei das Hubvolumen des Arbeitszylinders größer als das Hubvolumen des Pumpzylinders ausgebildet ist.

Die beschriebene Vorrichtung weist weiterhin eine mit dem Pumpkolben verbundene Pumpkolbenstange zum Verbinden mit einer Pressmaschine und eine mit dem Arbeitskolben verbundene Arbeitskolbenstange zum Antreiben einer Pressvorrichtung auf. Mit der Pumpkolbenstange ist eine Aufnahme zur Ankopplung an die Pressmaschine verbunden. An der gegenüberliegenden Seite der Vorrichtung ist die Arbeitskolbenstange mit einer Pressbackenaufnahme verbunden, wobei eine Pressbacke über einen bekannten Doppelrollenstößel zu einer Schwenkbewegung angetrieben wird und einen Pressfitting oder eine Pressschlinge zusammendrückt.

Nachfolgend wird beispielhaft ein gesamter Presszyklus beschrieben, wie er mit der beschriebenen Vorrichtung durchführbar ist.

Zu Beginn eines Presszyklus wird aus dem Vorratsbehälter über die erste Leitung Hydraulikflüssigkeit, vorzugweise Hydrauliköl, in den Pumpzylinder eingedrückt, wobei die in der ersten Leitung angeordneten Mittel zum Verhindern eines Rückflusses verhindern, dass die Hydraulikflüssigkeit während eines Hubes des Pumpzylinders zurück in den Vorratsbehälter fließen kann.

Während eines ersten Hubes des Pumpzylinders wird die Hydraulikflüssigkeit unter Druck gesetzt und fließt über die zweite Leitung in den Arbeitszylinder. Im Arbeitszylinder wird durch den Druck der Hydraulikflüssigkeit der Arbeitskolben vorgeschoben. Am Ende des ersten Hubes des Pumpzylinders kommt es durch den Anschlag des Pumpkolbens an der Wandung des Pumpzylinders zu einem starken Anstieg der Presskraft in der Pressmaschine, die daraufhin abschaltet und den Pressdruck vermindert. Durch die in der zweiten Leitung angeordneten Mittel zum Verhindern des Rückflusses bleibt der Druck im Arbeitszylinder auf den Arbeitskolben aufrecht, so dass auch die an der Kolbenstange und somit an der Pressbacke anliegende Presskraft aufrecht gehalten wird.

Anschließend wird erneut Hydraulikflüssigkeit aus dem Vorratsbehälter in den Pumpzylinder eingedrückt, wodurch der Pumpkolben zurückgeschoben wird. Im nächsten Zyklus und gegebenenfalls in weiteren Zyklen des Pumpzylinders wird dann erneut - wie zuvor beschrieben - Hydraulikflüssigkeit in den Arbeitszylinder gepresst, wobei der Druck im Arbeitszylinder aufrecht gehalten wird. Somit ist erfindungsgemäß vorgesehen, dass das Hubvolumen des Arbeitszylinders größer als das Hubvolumen des Pumpzylinders ausgebildet ist. Bevorzugt ist dabei, dass das Hubvolumen des Arbeitszylinders mindestens doppelt so groß wie, insbesondere mehrfach so groß wie das Hubvolumen des Pumpzylinders ausgebildet ist. Somit können mehr als ein Hub, vorzugsweise mehrere Hübe des Pumpzylinders zum Befüllen des Arbeitszylinders genutzt werden.

Gelangt der Hub des Arbeitskolbens an sein vorgegebenes Ende, übersteigt somit der Druck im Arbeitszylinder einen vorgegebenen Wert, dann ist der Pressvorgang für das Fitting beendet. Das Schaltmittel in der dritten Leitung öffnet sich in dieser Stellung des Arbeitskolbens und lässt die Hydraulikflüssigkeit in den Vorratsbehälter zurückfließen. Dadurch wird die Vorrichtung wieder in die Ausgangsposition zurück versetzt. Das Schaltmittel kann dabei hydraulisch, mechanisch oder elektronisch geschaltet werden.

Allgemein ausgedrückt wird das oben aufgezeigte technische Problem somit auch durch ein Verfahren zum Übersetzen einer mechanischen Kraft zum Antreiben einer Pressvorrichtung für Pressfittings gelöst, bei dem mit einem Pumpzylinder in mehr als einem Hub eine Hydraulikflüssigkeit in einen Arbeitszylinder gepumpt wird, bei dem zwischen jeweils zwei Hüben des Pumpzylinders der Druck im Arbeitszylinder aufrecht gehalten wird und bei dem die Hydraulikflüssigkeit nach Erreichen eines Enddruckes innerhalb des Arbeitszylinders die Hydraulikflüssigkeit aus dem Arbeitszylinder abgelassen wird.

Mit Hilfe der beschriebenen Vorrichtung als hydraulischer Kraftübersetzer und des beschriebenen Verfahrens ist es für ein Verpressen insbesondere von großen Pressfittings möglich, mehr als einen Hub der Pressmaschine zu nutzen, um einen ausreichend großen Hub des Arbeitszylinders bei ausreichend hohem Druck im Arbeitszylinder zu erzielen.

Die Vorrichtung wandelt daher eine beliebige Anzahl von Pressmaschinenhüben zu einem Presshub um. Das Wirkprinzip ist hierbei hydraulisch, wodurch die Kraft und die Hublänge des Arbeitszylinders variabel eingestellt werden können. Die Größe der Kraft und die Hublänge des Arbeitszylinders hängen einerseits vom durch dem Pumpzylinder erzeugten Druck und andererseits von der genauen Ausgestaltung der Länge und des Durchmessers des Arbeitszylinders ab. Diese können an die jeweilige Anwendung angepasst werden. Beispielsweise kann eine Arbeit von 32 kN ^{∗} 80 mm Hub oder 35 kN ^{∗} 100 mm Hub mit einer herkömmlichen Pressmaschine mit einem einem Arbeitsvermögen von 32 kN ^{∗} 40 mm Hub verrichtet werden.

Ein Vorteil der beschriebenen Vorrichtung zum Übersetzen einer mechanischen Kraft zum Antreiben einer Pressvorrichtung für Pressfittings besteht darin, dass während des Verpressens keine Umformarbeit verloren geht, da der Pressschlinge und die Pressbacke zwischen den Arbeitshüben der Pressmaschine, also zwischen zwei Hüben des Pumpzylinders mechanisch gespannt bleiben. Ein neues Ansetzen der Pressbacke wird somit in vorteilhafter Weise verhindert.

Des Weiteren ist der vollständige Pressvorgang durch die beschriebene Vorrichtung als Kraftübersetzer ebenso umfangreich abgesichert, wie es bei hydraulischen Sanitär-Pressmaschinen üblich ist. Die Absicherung wird dadurch gewährleistet, dass der Pressvorgang druckgesteuert abläuft und nur durch eine Notentriegelung beendet werden kann.

Ein weiterer Vorteil besteht darin, dass die Vorrichtung kompatibel zu den marktüblichen Pressmaschinen ist, da die beschriebene Vorrichtung zwischen einer Pressmaschine und einer Pressbacke angeordnet wird und die Presskraft der Pressmaschine in mindestens zwei Schritten auf die Pressbacke übertragen wird.

In bevorzugter Weise ist die zuvor beschriebene Vorrichtung dadurch weitergebildet, dass der Vorratsbehälter einen durch mindestens ein Druckelement vorgespannten Deckel aufweist. Der Deckel ist dazu beweglich ausgebildet und wird durch die Druckfeder in Richtung eines Auslassens der Hydraulikflüssigkeit verschoben. Das mindestens eine Druckelement kann als mindestens eine Druckfeder oder als ein durch eine Membran und ein Gasvolumen bestehender Druckspeicher verwirklicht sein. Durch die Vorspannung ist der Öl-Vorratsbehälter insgesamt frei von Luftblasen, wodurch die Vorrichtung in allen Lagen betrieben werden kann. Mithilfe des statischen Drucks im Vorratsbehälter wird der nicht federbelastete Pumpzylinder gefüllt, so dass kein Ansaugen von Öl durch den Pumpzylinder notwendig ist, um diesen zu füllen. Daher entsteht im Vorratsbehälter und im Pumpzylinder kein Unterdruck. Ein Fließen der Hydraulikflüssigkeit wird nur durch den statischen Druck bewirkt.

Des Weiteren ist in vorteilhafter Weise vorgesehen, dass der Arbeitskolben im Arbeitszylinder mittels einer Druckfeder vorgespannt ist. Der einfachwirkende Arbeitszylinder schiebt mittels der Druckfeder das Ölvolumen nach Beendigung des Presszyklus in den Vorratsbehälter. Dabei ist die Druckkraft der Druckfeder im Arbeitszylinder so ausgelegt, dass der erzeugte Druck in der Hydraulikflüssigkeit in der dritten Leitung ausreicht, um die Druckkraft des mindestens einen im Vorratsbehälter angeordneten Druckelements zu überwinden.

Der Boden des Pumpzylinders ist weiterhin in vorteilhafter Weise zudem mit einer Belüftungsbohrung versehen, womit verhindert wird, dass durch das Zurückschieben des Arbeitskolbens ein Unterdruck im Arbeitszylinder entsteht.

Erfindungsgemäß sind die Mittel zum Verhindern eines Rückflusses in der ersten Leitung und in der zweiten Leitung als Rückschlagventil ausgebildet und sind die Schaltmittel der dritten Leitung als Umschaltventil ausgebildet. Somit wird die gesamte Steuerung des Ablaufes eines gesamten Presszyklus durch die auftretenden Drücke gesteuert. Die Auslegung der Rückschlagventile und des Umschaltventils erfolgt in Abhängigkeit der jeweiligen Anwendung.

Alternativ dazu kann auch vorgesehen sein, dass die Mittel zum Verhindern eines Rückflusses weggesteuert sind, indem entsprechende Bohrungen in den Zylindern angeordnet sind und bei geeigneten Stellungen der Kolben entsprechenden Leitungen freigeben und einen Fluss von Hydraulikflüssigkeit ermöglichen.

Erfindungsgemäß zweigt in Strömungsrichtung, nach dem in der zweiten Leitung angeordneten Rückschlagventil, eine vierte Leitung mit einem Druckbegrenzungsventil ab und eine Steuerleitung verbindet das Druckbegrenzungsventil mit dem Umschaltventil. Somit ist an der Verbindungsleitung zwischen Pump- und Arbeitszylinder, also der zweiten Leitung, nach dem Rückschlagventil ein federbelastetes Druckbegrenzungsventil angeschlossen. Dieses öffnet ab einem definierten Abschaltdruck p_{A} und steuert mit dem Leitungsdruck das Umschaltventil an, das als ein 3-Wegeventil mit 2 Schaltstellungen ausgebildet ist. Dieses befindet sich in der dritten Leitung, bevorzugt im Boden des Arbeitszylinders, und öffnet aufgrund des vom Druckbegrenzungsventil ausgehenden hydraulischen Schaltsignals die dritte Leitung, also die Verbindung zwischen dem Arbeitszylinder und dem Vorratsbehälter. Hierdurch wird das Ölvolumen des Arbeitszylinders in den Vorratsbehälter abgelassen und somit der Pressvorgang beendet.

Damit das Umschaltventil wieder in seine Ausgangsstellung zurückversetzt werden kann, ist insbesondere vorgesehen, dass das Umschaltventil einen mechanischen Stößel aufweist und dass der Arbeitskolben so angeordnet ist, dass der Arbeitskolben bei einem Zurückführen den Stößel betätigt und das Umschaltventil schließt.

Eine weitere besondere Weiterentwicklung der beschriebenen Vorrichtung besteht darin, dass die dritte Leitung ein Drosselventil aufweist.

Der Grund für die Anordnung eines Drosselventils in der dritten Leitung ist Folgender. In der Regel wird der Pressdruck in den bekannten Pressmaschinen als Schaltsignal zur Beendigung des Pressvorgangs verwendet, so wie es oben für das Ende eines Hubes des Pumpzylinders beschrieben worden ist. Diese Pressmaschinen sind also kraftgesteuert, ebenso wie die beschriebene Vorrichtung, die als Kraftübersetzter fungiert. Dementsprechend ist es vorteilhaft, wenn die Vorrichtung bzw. der Kraftübersetzer den Pressvorgang beendet, bevor die Pressmaschine den Presshub im Pumpzylinder beendet. Aus diesem Grund wird die dritte Leitung, also die Ablassleitung vom Umschaltventil in den Vorratsbehälter, gedrosselt. Dadurch wird der Druckabfall im Arbeitszylinder und Pumpzylinder zeitlich verzögert. Infolge dieser Verzögerung wird ein entsprechend hoher Restdruck bzw. eine ausreichend hohe Restkraft im Pumpzylinder gehalten, so dass die Pressmaschine nicht verfrüht abschaltet, sondern erst im Anschlag des Hubes im Pumpzylinder, wie oben beschrieben. Entsprechend gleicht die Abschaltung der Pressmaschine im letzten Hub der Abschaltung im ersten Hub bzw. und allen weiteren Hüben bis zum vorletzten Hub.

Zudem kann eine fünfte Leitung zwischen dem Arbeitszylinder-seitigen Eingang des Drosselventils und dem Pumpzylinder vorgesehen sein, in der Mittel zum Verhindern eines Rückflusses von Hydraulikflüssigkeit vom Pumpzylinder in die dritte Leitung, insbesondere ein Rückschlagventil, vorgesehen sein können. Dadurch wird insbesondere zu Beginn des Ablassens der Hydraulikflüssigkeit in den Vorratsbehälter ein Teil, insbesondere ein größerer Teil der Hydraulikflüssigkeit in den Pumpzylinder abgelassen. Dadurch wird sichergestellt, dass der Druck im Pumpzylinder nicht zu schnell absinkt und die angeschlossene Pressmaschine nicht abschaltet. Somit kann der Druck im Pumpzylinder bis zum Ende des Pressmaschinenhubs aufrecht gehalten werden und eine fehlerfreie Abschaltung der Pressmaschine gewährleistet werden.

Man kann den Fluss der Hydraulikflüssigkeit auch als einen großen Kreislauf mit Pump-, Arbeitszylinder und Vorratsbehälter mit erster, zweiter und dritter Leitung oder als einen kleinen Kreislauf mit Pump- und Arbeitszylinder mit der zweiten, dritten und fünften Leitung verstehen.

Eine weitere bevorzugte Ausgestaltung der beschriebenen Vorrichtung besteht darin, dass der Pumpzylinder in entgegengesetzter Richtung zum Arbeitszylinder arbeitet. Dadurch kann eine Pressmaschine, deren Pressbewegung mit entsprechend ausgebildeter Mechanik in eine Zugbewegung umgewandelt wird, eingesetzt werden. Diese Ausgestaltung hat den Vorteil, dass der Bauraum für die beschriebene Vorrichtung im Bereich des Pumpzylinders kurz gehalten werden kann.

Zudem ist es vorteilhaft, wenn der Pumpzylinder und der Arbeitszylinder in Reihe angeordnet sind, womit eine günstige Drehbearbeitung des Gehäuses möglich ist, das beide Zylinder aufnimmt.

Im Folgenden wird die Erfindung anhand von Ausführungsbeispielen mit Bezug auf die Zeichnung erläutert. In der Zeichnung zeigen
- Fig. 1: einen Hydraulik-Schaltplan für eine erfindungsgemäße Vorrichtung,
- Fig. 2: eine perspektivische Darstellung einer erfindungsgemäßen Vorrichtung mit angesetzter Aufnahme für eine Pressmaschine und einer Halterung für eine Doppelrollenstößel,
- Fig. 2a: eine Seitenansicht gemäß Fig. 2 mit der Kennzeichnung der Schnittebenen für die Fig. 3 bis 5,
- Fig. 3: die erfindungsgemäße Vorrichtung im Querschnitt entlang der Linie III-III in Fig. 2a und 6,
- Fig. 4: die erfindungsgemäße Vorrichtung im Querschnitt entlang der Linie IV-IV in Fig. 2a und 6,
- Fig. 5: die erfindungsgemäße Vorrichtung im Querschnitt entlang der Linie V-V in Fig. 2a und 6,
- Fig. 6: die erfindungsgemäße Vorrichtung im Querschnitt entlang der Linie VI-VI in den Fig. 3, 4 und 5 und
- Fig. 7: eine erfindungsgemäße Vorrichtung mit einer angesetzten Pressmaschine.

In der nachfolgenden Beschreibung der verschiedenen erfindungsgemäßen Ausführungsbeispiele werden gleiche Bauteile mit gleichen Bezugszeichen versehen, auch wenn die Bauteile bei den verschiedenen Ausführungsbeispielen in ihrer Dimension oder Form Unterschiede aufweisen können.

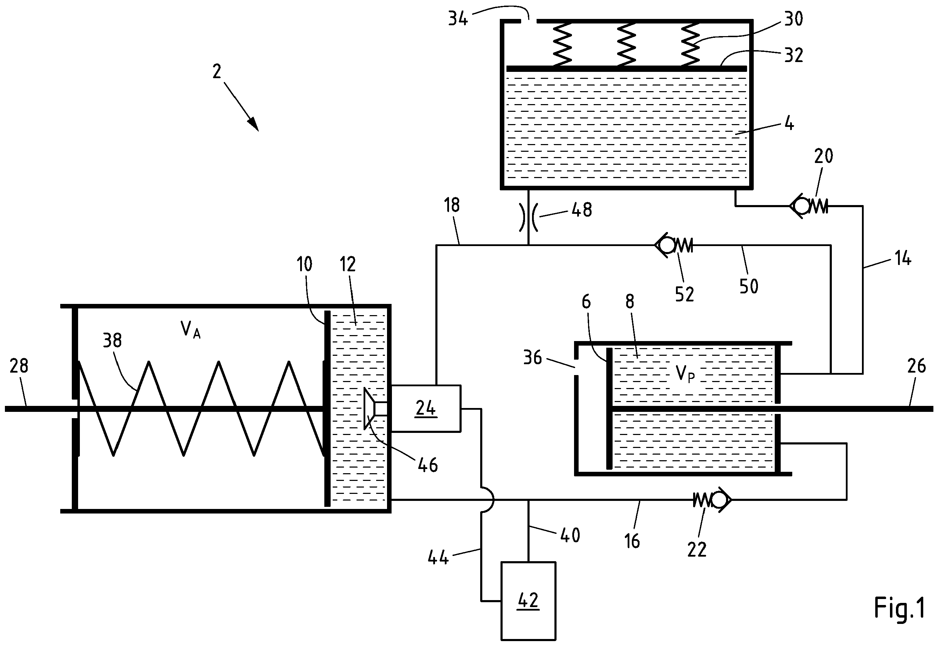

Fig. 1 zeigt in Form eines Hydraulik-Schaltplans den prinzipiellen Aufbau und die Funktionsweise einer erfindungsgemäßen Vorrichtung 2 zum Übersetzen einer mechanischen Kraft zum Antreiben einer Pressvorrichtung für Pressfittings. In dieser Darstellung sind sowohl die Elemente der erfindungsgemäßen Vorrichtung 2 als auch optionale und vorteilhafte Elemente dargestellt.

Die Vorrichtung 2 weist einen Vorratsbehälter 4 für Hydraulikflüssigkeit, vorliegend Hydrauliköl. Des Weiteren ist ein einen Pumpkolben 6 aufweisender Pumpzylinder 8 und ein einen Arbeitskolben 10 aufweisender Arbeitszylinder 12 vorgesehen. Eine erste Leitung 14 verbindet den Vorratsbehälter 4 mit dem Pumpzylinder 8 und eine zweite Leitung 16 verbindet den Pumpzylinder 8 mit dem Arbeitszylinder 12. Eine dritte Leitung 18 verbindet wiederum den Arbeitszylinder 12 mit dem Vorratsbehälter 4. Somit wird insgesamt ein Kreislauf gebildet, in dem das Hydrauliköl während eines Presszyklus der Vorrichtung 2 umlaufen kann.

In der ersten Leitung 14 ist ein Rückschlagventil 20 als Mittel zum Verhindern eines Rückflusses von Hydrauliköl vom Pumpzylinder 8 in den Vorratsbehälter 4 vorgesehen. Somit kann das Hydrauliköl nur vom Vorratsbehälter 4 in den Pumpzylinder 8 fließen.

In der zweiten Leitung 16 ist ebenfalls ein Rückschlagventil 22 als Mittel zum Verhindern eines Rückflusses von Hydrauliköl vom Arbeitszylinder 12 in den Pumpzylinder 8 vorgesehen. Dadurch wird verhindert, dass während des Presszyklus Hydrauliköl vom Arbeitszylinder 12 in den Pumpzylinder 8 zurückfließt.

Am Boden des Arbeitszylinders 12 ist ein Umschaltventil 24 als Schaltmittel zum Öffnen und Schließen der dritten Leitung 18 vorgesehen. Das Umschaltventil 24 wird aktiviert und geöffnet, wenn der Hub des Arbeitskolbens 10 seine Endposition erreicht hat und der Druck des Hydrauliköls im Arbeitszylinder 12 über einen Grenzwert ansteigt. Das Öffnen des Umschaltventils beendet also den Presszyklus der erfindungsgemäßen Vorrichtung 2.

Des Weiteren ist eine Pumpkolbenstange 26 mit dem Pumpkolben 6 verbunden, so dass eine Press- oder Zugmaschine an der Pumpkolbenstange 26 eine Kraft ausüben kann, um einen Hub des Pumpkolbens 8 durchzuführen. Ebenso ist eine Arbeitskolbenstange 28 mit dem Arbeitskolben 10 verbundenen, um eine Pressvorrichtung zum Betätigen einer Pressbacke anzutreiben. Somit ist die erfindungsgemäße Vorrichtung 2 als hydraulischer Kraftübersetzer zwischen einer Press- oder Zugmaschine und einer Pressvorrichtung angeordnet. Erfindungsgemäß ist das Hubvolumen V_{A} des Arbeitszylinders 12 größer als das Hubvolumen V_{P} des Pumpzylinders 8 ausgebildet. Bevorzugt ist das Hubvolumen V_{A} des Arbeitszylinders 12 mindestens doppelt so groß wie, insbesondere mehrfach so groß wie das Hubvolumen V_{P} des Pumpzylinders 8 ausgebildet. Somit ist mehr als einen Hub des Pumpkolbens 6 notwendig, um den maximalen Vorschub des Arbeitskolbens 10 zu erreichen.

Zu Beginn eines Presszyklus der Vorrichtung 2 ist der Pumpzylinder 8 weitgehend, wenn nicht vollständig mit Hydrauliköl gefüllt, dass aus dem Vorratsbehälter 4 über die Leitung 14 zugeleitet worden ist. Bei einem ersten Hub des Pumpkolbens 6 im Pumpzylinder 8, der durch eine nicht in Fig. 1 dargestellte Press- bzw. Zugmaschine erzeugt wird, wird das Hydrauliköl aus dem Pumpzylinder 6 durch die zweite Leitung 16 in den Arbeitszylinder 12 gepumpt. Sobald der Pumpkolben 6 im Pumpzylinder 8 anschlägt, steigt der Pressdruck bzw. die Zugkraft in der Pressmaschine stark an, so dass die Pressmaschine abschaltet. Ab diesem Zeitpunkt fließt erneut Hydrauliköl aus dem Vorratsbehälter 4 in den Pumpzylinder 8, bevor ein zweiter bzw. ein weiterer Hub des Pumpkolbens 6 beginnen kann.

Durch die beschriebenen Rückschlagventile 20 und 22 und das Umschaltventil 24 wird dabei sichergestellt, dass einerseits zwischen zwei Hüben des Pumpkolbens 6 der Druck im bereits in den Arbeitszylinder 12 gepumpten Hydrauliköl erhalten bleibt. Somit wird auch die Presskraft, die bereits während eines ersten Hubes durch die Arbeitskolbenstange 28 auf die Pressvorrichtung ausgeübt wird, aufrecht gehalten. Bei jedem weiteren Hub des Pumpkolbens 6 im Pumpzylinder 8 wird weiteres Hydrauliköl, das zwischen zwei Hüben aus dem Vorratsbehälter 4 in den Pumpzylinder 8 nachgeflossen ist, über die zweite Leitung 16 in den Arbeitszylinder 12 gepumpt. Der Arbeitskolben 10 wird also schrittweise weiter, in Fig. 1 nach links, ausgeschoben.

Wird dann beispielweise während des dritten Hubes des Pumpkolbens 6 eine Endstellung des Arbeitskolbens 10 erreicht, so schaltet das Umschaltventil 24 um und das Hydrauliköl fließt durch das Umschaltventil 24 wieder in den Vorratsbehälter 4 zurück. Danach ist die Vorrichtung 2 wieder im Ausgangszustand und bereit für einen neuen Presszyklus.

Die nachfolgend im Zusammenhang mit der Fig. 1 erläuterten Elemente der Vorrichtung 2 stellen jeweils optionale, vorteilhafte Merkmale dar, die nicht die zugrundeliegende erfinderische Idee einschränken sollen.

Zunächst weist der Vorratsbehälter 4 einen durch Druckfedern 30 vorgespannten Deckel 32 auf, so dass das Hydrauliköl im Vorratsbehälter 4 unter einem statischen Druck gehalten wird. Für ein Befüllen des Pumpzylinders 8 zwischen zwei Hüben des Pumpkolbens 6 wird somit keine aktive Bewegung des Pumpkolbens 6 und der Pumpkolbenstange 26 benötigt. Somit entsteht auch kein Unterdruck innerhalb der Vorrichtung 2 und insbesondere kein Unterdruck innerhalb der ersten Leitung 14. Auf der vom Hydrauliköl abgewandten Seite des Deckels 32 ist mindestens eine Belüftungsöffnung 34 vorgesehen, so dass beim Verschieben des Deckels 32 aufgrund der Kraft der Druckfedern 30 ebenfalls kein Unterdruck entsteht.

Aus dem gleichen Grund ist im Boden des Pumpzylinders 8 eine Belüftungsbohrung 36 vorgesehen. Durch die Belüftungsbohrung 42 strömt beim Vorschieben des Pumpkolbens 6 Luft in den entstehenden Raum innerhalb des Pumpkolbens 6 ein und das Entstehen eines Unterdrucks wird erneut vermieden.

Des Weiteren ist der Arbeitskolben 10 im Arbeitszylinder 12 mittels einer Druckfeder 38 vorgespannt. Durch die Druckfeder 38 wird nach dem Öffnen des Umschaltventils 24 durch den Arbeitskolben 10 das Hydrauliköl aus dem Arbeitszylinder 12 herausgeschoben, ohne dass es eines aktiven Betätigens des Arbeitskolbens 10 bedarf. Die Kraft der Druckfeder 38 reicht dabei aus, einen Druck des Hydrauliköls in der dritten Leitung 18 zu erzeugen, der die Kraft der Federn 30 im Vorratsbehälter 4 zu überwindet und Hydrauliköl in den Vorratsbehälter 4 fließen lässt.

Zuvor ist erläutert worden, dass das Umschaltventil 24 bei Erreichen des maximalen Hubes des Arbeitskolbens 10 öffnet und das Hydrauliköl in den Vorratsbehälter fließen lässt. Die Ansteuerung des Umschaltventils 24 kann dabei rein mechanisch oder elektronisch erfolgen. Nachfolgend wird eine hydrodynamische Ansteuerung des Umschaltventils 24 erläutert.

Dazu zweigt in Strömungsrichtung nach dem in der zweiten Leitung 16 angeordneten Rückschlagventil 22 eine vierte Leitung 40 mit einem Druckbegrenzungsventil 42 ab. Des Weiteren verbindet eine Steuerleitung 44 das Druckbegrenzungsventil 42 mit dem Umschaltventil 24 und erzeugt somit dann ein hydraulisches Steuersignal, wenn der Druck im Hydrauliköl in der zweiten Leitung 16 größer als ein vorgegebener Wert ist und das Druckbegrenzungsventil 42 öffnet. Dieses Steuersignal entsteht also insbesondere dann, wenn der Arbeitskolben 10 seine Endposition bzw. seinen maximalen Hub erreicht hat und daher bei weiterem Betätigen des Pumpkolbens 6 der Druck in der zweiten Leitung 16 weiter ansteigt.

Des Weiteren weist das Umschaltventil 24 einen mechanischen Stößel 46 auf, der vom Arbeitskolben 10 bei einem Zurückführen durch die Druckfeder 38 betätigt wird und dabei das Umschaltventil 24 schließt. Dadurch wird das Ablassen von Hydrauliköl aus dem Arbeitszylinder 12 beendet und das Umschaltventil 24 wieder in den Ausgangszustand zurück versetzt.

Wenn das Umschaltventil 24 geöffnet ist, strömt das Hydrauliköl aus dem Arbeitszylinder 12 durch die dritte Leitung 18 in den Vorratsbehälter 4 zurück. Dabei kommt es zu einem Druckabfall auch innerhalb des Pumpzylinders 8.

In der Regel wird nun der Pressdruck in den bekannten Pressmaschinen als Schaltsignal zum Beenden des Pressvorgangs verwendet. Diese Pressmaschinen sind also kraftgesteuert, ebenso wie die vorliegende Vorrichtung 2 als Kraftübersetzter. Dementsprechend ist es vorteilhaft, dass die Vorrichtung 2 den Presszyklus beendet, bevor die Pressmaschine den Presshub für den Pumpkolben 6 beendet. Da insofern die Steuerungen der Pressmaschinen und der Vorrichtung 2 bzw. des Kraftübersetzers ähnlich agieren, kann es Pressmaschinentypen geben, die die Abschaltung der Vorrichtung 2 als eigenes Abschaltsignal interpretieren. Hierbei kann es zu Fehlfunktionen seitens der Pressmaschinen kommen.

Zur Lösung dieses speziellen Problems ist vorgesehen, dass die dritte Leitung 18 ein Drosselventil 48 aufweist. Somit wird die dritte Leitung 18, also die Ablassleitung vom Umschaltventil 24 zum Vorratsbehälter 4 gedrosselt.

Dadurch wird der Druckabfall im Arbeitszylinder 12 und im Pumpzylinder 8 zeitlich verzögert. Infolge dieser Verzögerung des Druckabfalls wird ein entsprechend hoher Restdruck bzw. eine ausreichend hohe Restkraft im Pumpzylinder 6 aufrecht gehalten, so dass die Pressmaschine nicht verfrüht abschaltet, sondern erst im Anschlag des Pumpkolbens 6 im Pumpzylinder 8 am Ende des Pumphubs, so wie es für den ersten Hub des Pumpkolbens 6 beschrieben worden ist.

Weiterhin ist in vorteilhafter Weise eine fünfte Leitung 50 zwischen dem Arbeitszylinder-seitigen Eingang des Drosselventils 48 und der ersten Leitung 14 vorgesehen, wobei erneut in der fünften Leitung 50 ein Rückschlagventil 52 als Mittel zum Verhindern eines Rückflusses von Hydrauliköl vom Pumpzylinder 8 in die dritte Leitung 18 vorgesehen ist.

Wie sich weiterhin aus Fig. 1 ergibt, arbeitet der Pumpzylinder 8 mit dem Pumpkolben 6 in entgegengesetzter Richtung zum Arbeitszylinder 12 mit dem Arbeitskolben 10. Dadurch wird eine raumsparende Anordnung beider Zylinder in einer Anordnung erreicht.

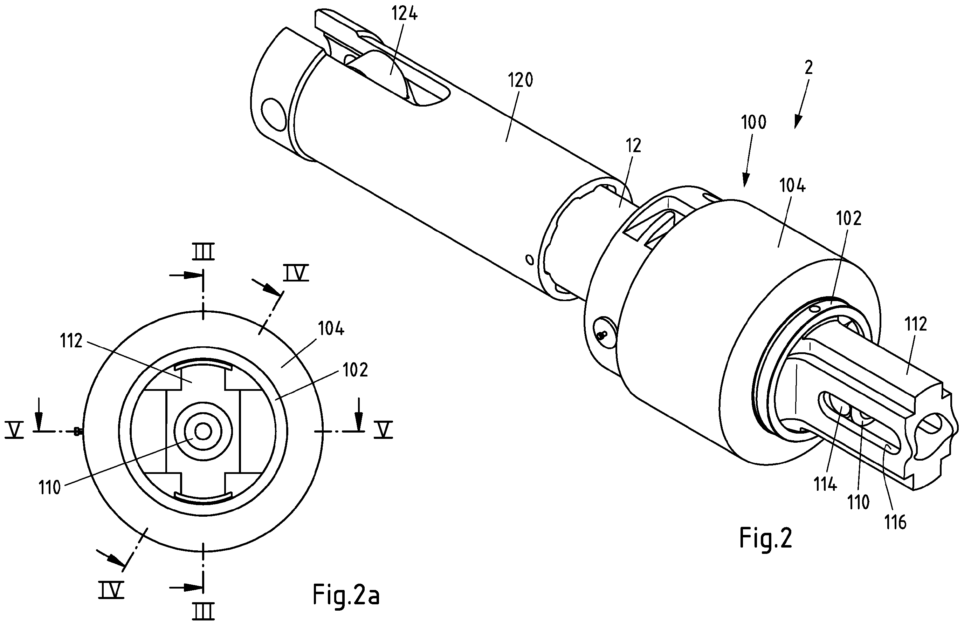

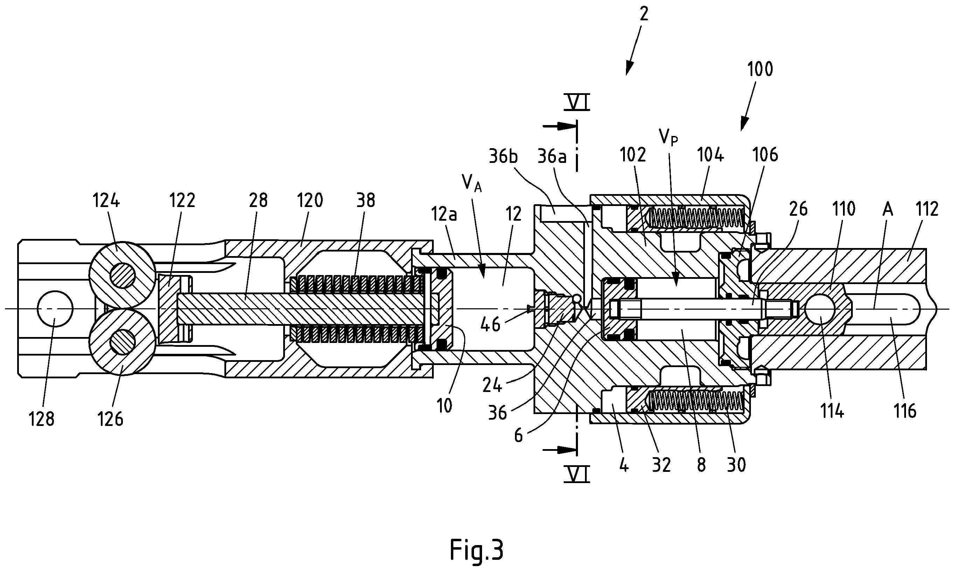

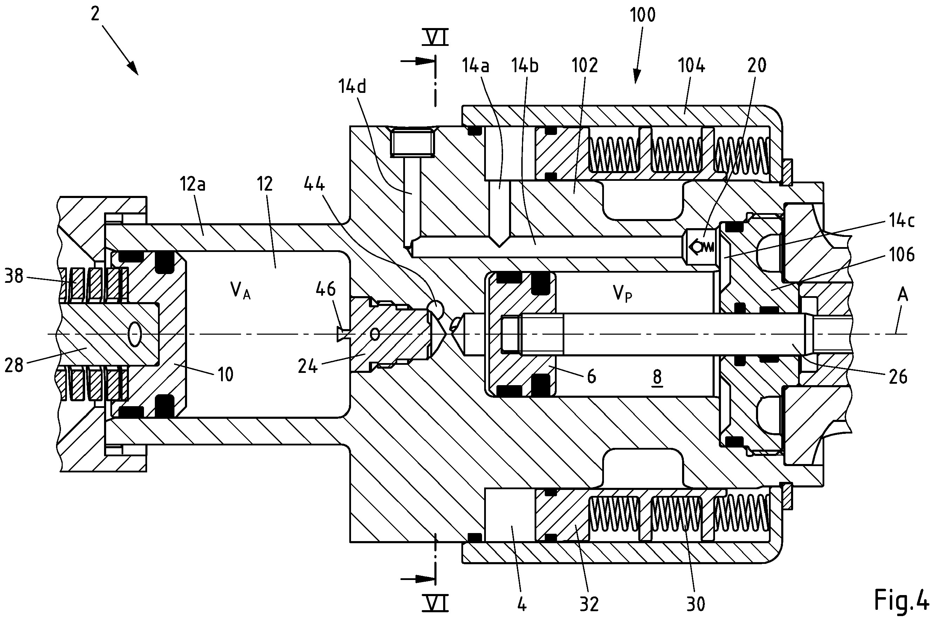

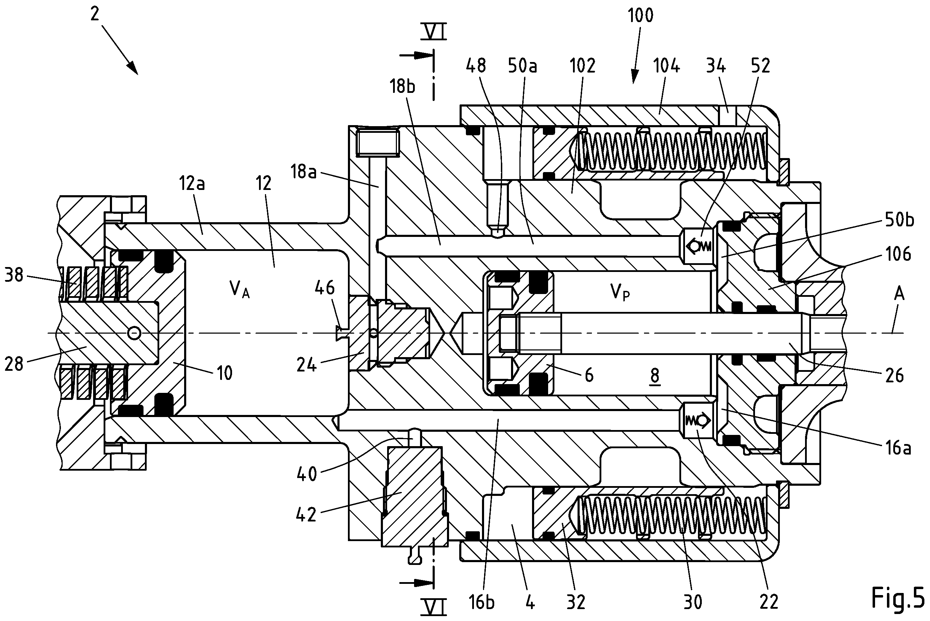

Das in Fig. 1 gezeigte und zuvor erläuterte Beispiel einer erfindungsgemäßen Vorrichtung 2 in Form eines hydraulischen Schaltplans ermöglicht die Diskussion aller Elemente in einer Darstellung in einer Ebene. Die Fig. 2 bis 7 zeigen ein konkretes Ausführungsbeispiel einer erfindungsgemäßen Vorrichtung 2 in Form von Konstruktionszeichnungen. Dabei bezeichnen die gleichen Bezugszeichen, wie sie zuvor in Fig. 1 verwendet worden sind, gleiche Bauteilen und Elemente der Vorrichtung 2, auch wenn die konkrete Bauform unterschiedlich ist. Die Skalierung ist in Fig. 3 unterschiedlich zu den Fig. 4 und 5 gewählt, um einerseits in Fig. 3 einen Überblick über die gesamte Vorrichtung 2 mit den angeschlossenen Bauteilen zu zeigen und um andererseits die Details innerhalb der Vorrichtung 2 anhand der Fig. 4 und 5 besser darstellen zu können.

Fig. 2 zeigt die erfindungsgemäße Vorrichtung 2 in einer perspektivischen Ansicht, während die Fig. 3 bis 6 verschiedene Querschnitte zeigen. Da die verschiedenen Leitungen und Ventile des erfindungsgemäßen Aufbaus in unterschiedlichen azimutalen Ebenen angeordnet sind, sind diese Elemente teilweise nur in einer der dargestellten Querschnitte gezeigt. Alle Figuren zeigen zu Orientierung dieselbe Achse A.

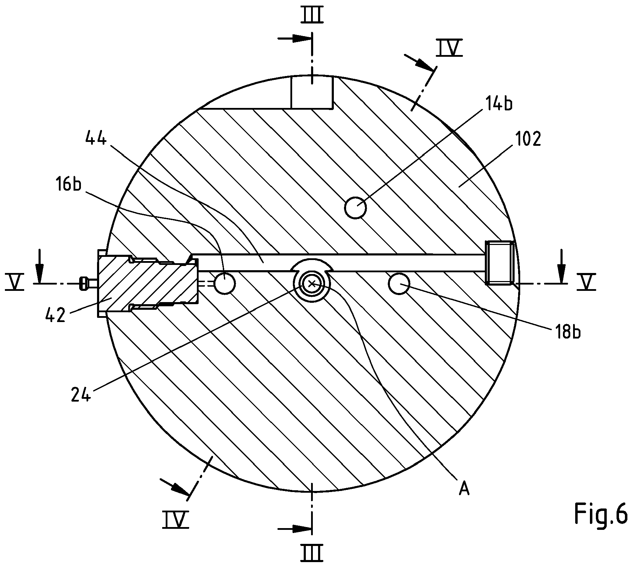

In den Fig. 2a und 6 sind mit den Ziffern III, IV und V die Richtung der Querschnitte für die Fig. 3, 4 und 5 angezeigt. In den Fig. 3, 4 und 5 ist wiederum jeweils mit der Ziffer VI die Richtung des Querschnitts gekennzeichnet, der in Fig. 6 dargestellt ist.

Des Weiteren sind den Figuren die für die Abdichtung der verschiedenen Bauelemente gegeneinander Dichtungselemente als schwarze Flächen dargestellt, die nicht im Einzelnen erläutert oder gekennzeichnet werden.

Die Vorrichtung 2 weist ein Gehäuse 100 mit einem inneren Gehäuseteil 102 und einem äußeren Gehäuseteil 104 auf. Zwischen beiden Gehäuseteilen 102 und 104 ist ein Vorratsbehälter 4 für Hydrauliköl ausgebildet. Innerhalb des Vorratsbehälters 4 sind mehrere axial wirkende Druckfedern 30 angeordnet, die einerseits gegen das äußere Gehäuseteil 104 (in den Figuren nach rechts) gelagert sind und gegen einen Deckel 32 wirken, der den Vorratsbehälter 4 seitlich begrenzt. Durch die Federn 30 und den Deckel 32 wird das in dem Vorratsbehälter 4 vorhandene Hydrauliköl unter einen statischen Druck gesetzt.

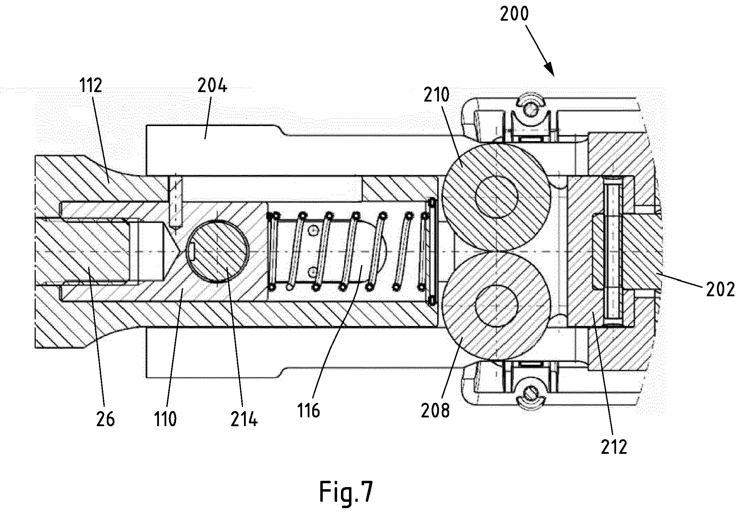

Innerhalb des inneren Gehäuseteils 102 ist ein Pumpzylinder 8 als zylindrische Bohrung parallel zur Achse A ausgebildet, in dem ein Pumpkolben 6 angeordnet ist. Der Pumpzylinder 8 wird durch einen Deckel 106 axial verschlossen. Mit dem Pumpkolben 6 ist eine im Deckel 106 geführte Pumpkolbenstange 26 verbunden, die wiederum mit einem Zuganker 110 verbunden ist. Der Zuganker 110 ist innerhalb einer Aufnahme 112 für eine eine Zugkraft erzeugende Pressmaschine (in Fig. 7 dargestellt) hin- und herbeweglich angeordnet. Für eine Kopplung mit der Pressmaschine ist eine Bohrung 114 vorgesehen, in der ein Bolzen aufgenommen werden kann, der wiederum in seitlichen Langlöchern 116 geführt wird.

Wie Fig. 3 zeigt, ist im Boden des Pumpzylinders 8 eine axiale Belüftungsbohrung 36 vorgesehen, die über eine radial eingebrachte Bohrung 36a nach außen hin zu einer Aussparung 36b an der Außenseite des inneren Gehäuseteils 102 geöffnet ist.

Des Weiteren ist am inneren Gehäuseteil 102 ein zylindrischer Abschnitt 12a für den Arbeitszylinder 12 ausgebildet, der einen Arbeitskolben 10 aufweist. Der Arbeitskolben 10 wird mittels einer Druckfeder 38 in Richtung nach rechts in den Figuren vorgespannt und ist mit einer Arbeitskolbenstange 28 verbunden, die in einem zylindrischen Gehäuseteil 120 aufgenommen ist. Die Arbeitskolbenstange 28 ist mit einem im Gehäuseteil 120 geführten Doppelrollenstößel 122 verbunden, der zwei Rollen 124 und 126 trägt. Diese Anordnung ist an sich bekannt und wird zum Betätigen einer Pressbacke (nicht dargestellt) eingesetzt, die mit einem in einer Bohrung 126 geführten Bolzen an dem Gehäuseteil 120 befestigt werden kann.

Wie Fig. 4 zeigt, ist im inneren Gehäuseteil 102 eine erste Leitung 14 zum Verbinden des Vorratsbehälters 4 mit dem Pumpzylinder 8 ausgebildet, die aus mehreren Leitungsabschnitten besteht. Der Leitungsabschnitt 14a ist als radial eingebrachte Bohrung ausgebildet, steht in Kontakt mit dem Vorratsbehälter 4 und erstreckt sich nach innen in Richtung eines Leitungsabschnittes 14b, der als axiale Bohrung ausgebildet ist. Die Bohrung 14b steht über ein Rückschlagventil 20 mit einem Leitungsabschnitt 14c in Kontakt, der als Vertiefung im Deckel 106 ausgebildet ist. Am anderen Ende der Bohrung 14b ist eine radial nach außen verlaufende Bohrung 14d ausgebildet, durch die das Hydrauliköl eingelassen werden kann und die mittels eines Verschlusses verschlossen werden kann.

Fig. 5 zeigt nun die Ausgestaltung einer zweiten Leitung 16, die aus zwei Leitungsabschnitten besteht und den Pumpzylinders 8 mit dem Arbeitszylinder 12 verbindet. Ein Leitungsabschnitt 16a ist als Vertiefung im Deckel 106 ausgebildet, der über ein Rückschlagventil 22 mit dem als axiale Bohrung ausgebildeten Leitungsabschnitt 16b verbunden ist. Der Leitungsabschnitt 16b mündet in den Arbeitszylinder 12.

Fig. 5 zeigt ebenfalls eine dritte Leitung 18 mit mehreren Leitungsabschnitten zum Verbinden des Arbeitszylinders 12 mit dem Vorratsbehälter 4. Ein Leitungsabschnitt 18a in Form einer radialen Bohrung verbindet den Arbeitszylinder 12 über ein Umschaltventil 24 mit der Außenseite des inneren Gehäuseteils 102 und kann dort mit einem nicht dargestellten Verschluss verschlossen werden. Ein Leitungsabschnitt 18b ist als axiale Bohrung ausgebildet und verbindet den Leitungsabschnitt 18a mit einem Drosselventil 48, das in den Vorratsbehälter 4 mündet.

Weiterhin zeigt Fig. 5, dass in Strömungsrichtung nach dem Rückschlagventil 22 im Leitungsabschnitt 16b der zweiten Leitung 16 eine vierte Leitung 40 abzweigt und zu einem Druckbegrenzungsventil 42 führt. Wie in Fig. 6 zu erkennen ist, verbindet eine Steuerleitung 44 das Druckbegrenzungsventil 42 mit dem Umschaltventil 24, um ein hydraulisches Steuersignal an das Umschaltventil 24 zu übertragen.

Dem Innenraum des Arbeitszylinders 12 zugewandt weist das Umschaltventil 24 einen mechanischen Stößel 46 auf. Der Arbeitskolben 10 ist dabei so angeordnet, dass bei einem Zurückführen durch die Druckfeder 38 der Arbeitskolben 10 den Stößel 46 betätigt und das Umschaltventil 24 schließt.

Wie Fig. 5 weiterhin zeigt, geht der Leitungsabschnitt 18b in einen Leitungsabschnitt 50a einer fünften Leitung 50 über, die zwischen dem Arbeitszylinder-seitigen Eingang des Drosselventils 48 und dem Pumpzylinder 8 vorgesehen ist. Der Leitungsabschnitt 50a geht über ein Rückschlagventil 52 in einen Leitungsabschnitt 50b über, der im Deckel 106 ausgebildet und mit dem Pumpzylinder 8 verbunden ist.

Erfindungsgemäß ist nun das Hubvolumen V_{A} des Arbeitszylinders 12 größer als das Hubvolumen Vp des Pumpzylinders 8 ausgebildet, wobei es bevorzugt ist, dass das Hubvolumen V_{A} des Arbeitszylinders 12 mindestens doppelt so groß wie, insbesondere mehrfach so groß wie das Hubvolumen Vp des Pumpzylinders 8 ausgebildet ist. Diese Größenverhältnisse ermöglichen es, dass mit mehr als einem Hub des Pumpkolbens 6 der Arbeitszylinder 12 gefüllt wird.

Wie sich aus den Figuren ergibt, arbeitet der Pumpzylinder 8 in entgegengesetzter Richtung zum Arbeitszylinder 12. Das bedeutet, dass eine Volumenverkleinerung innerhalb des Pumpzylinders 8 durch eine Bewegung des Pumpkolbens 6 in den Figuren nach rechts und eine Volumenvergrößerung innerhalb des Arbeitszylinders 12 durch eine Bewegung des Arbeitskolbens 10 in den Figuren nach links erfolgt. Daher muss an der Antriebsseite der mit der Pumpkolbenstange 26 verbundene Zuganker 110 für eine Hub der Pumpkolbenstange aus dem Pumpzylinder 8 herausgezogen werden. Dazu kann eine Pressmaschine mit einer kinematischen Umkehr eingesetzt werden, die nachfolgend anhand der Fig. 7 erläutert wird.

In Fig. 7 wird die Aufnahme 112 für eine eine Zugkraft erzeugende Pressmaschine für die Pressmaschine 200 beschrieben, die an sich für das Verpressen von Fittings und Rohrverbindern geeignet ist. Die Pressmaschine 200 ist dazu vorgesehen, einen Kolben 202 relativ zu Laschen 204, die mit der Pressmaschine 200 verbunden sind, vorzuschieben und damit ein Rollenpaar 208 und 210 über eine Halterung 212 zu verstellen. Die Ausbildung des Rollenpaars ist hier nicht von Bedeutung, deren Funktion wird nur bei dem Verpressen von Fittings benötigt und soll hier nicht weiter erläutert werden. Jedenfalls übertragen die Rollen 208 und 210 linear die vom Kolben 202 erzeugte Kraft auf die Aufnahme 112.

Weiterhin ist ein Sicherungsbolzen 214 vorgesehen, der mit den Laschen 204 lösbar verbunden ist. Durch den Sicherungsbolzen 214 wird der Zuganker 110, der innerhalb der Aufnahme 112 ageordnet ist, mit der Pressmaschine 200 verbunden. Wird nun die Pressmaschine 200 betätigt und der Kolben 202 relativ zur Pressmaschine 200 und somit auch relativ zu den Laschen 204 verstellt, dann kommt es zu einer entsprechenden Relativbewegung zwischen der Aufnahme 112 und dem Zuganker 110. Diese Relativbewegung bewirkt dann eine Bewegung des an der Aufnahme 112 anliegenden Gehäuses 100 relativ zu der mit dem Zuganker 110 verbundenen Pumpkolbenstange 26.

Somit wird durch Betätigen der Pressmaschine 200 die Pumpkolbenstange 26 zusammen mit dem Zuganker 110 durch die Aufnahme 112 herausgezogen, so dass ein Pumphub durchgeführt wird. Nach Abschluss des Bewegungshubs des Kolbens 202 ist der Pumphub des Pumpkolbens 6 innerhalb des Pumpzylinders 8 abgeschlossen.

## Patentansprüche

1. Vorrichtung zum Übersetzen einer mechanischen Kraft zum Antreiben einer Pressvorrichtung für Pressfittings,
- mit einem Vorratsbehälter (4) für Hydraulikflüssigkeit,
- mit einem einen Pumpkolben (6) aufweisenden Pumpzylinder (8),
- mit einem einen Arbeitskolben (10) aufweisenden Arbeitszylinder (12),
- mit einer ersten Leitung (14) zum Verbinden des Vorratsbehälters (4) mit dem Pumpzylinder (8),
- mit einer zweiten Leitung (16) zum Verbinden des Pumpzylinders (8) mit dem Arbeitszylinder (12) und
- mit einer dritten Leitung (18) zum Verbinden des Arbeitszylinders (12) mit dem Vorratsbehälter (4),
- wobei in der ersten Leitung (14) Mittel (20) zum Verhindern eines Rückflusses von Hydraulikflüssigkeit vom Pumpzylinder (8) in den Vorratsbehälter (4) vorgesehen sind,
- wobei in der zweiten Leitung (16) Mittel (22) zum Verhindern eines Rückflusses von Hydraulikflüssigkeit vom Arbeitszylinder (12) in den Pumpzylinder (8) vorgesehen sind,
- wobei Schaltmittel (24) zum Öffnen und Schließen der dritten Leitung (18) vorgesehen sind,
- wobei das Hubvolumen (V_{A}) des Arbeitszylinders (12) größer als das Hubvolumen (V_{P}) des Pumpzylinders (8) ausgebildet ist,
- wobei die Mittel zum Verhindern eines Rückflusses in der ersten Leitung (14) und in der zweiten Leitung (16) als Rückschlagventil (20, 22) ausgebildet sind und
- wobei die Schaltmittel der dritten Leitung (18) als Umschaltventil (24) ausgebildet sind
**dadurch gekennzeichnet,**
- **dass** in Strömungsrichtung nach dem in der zweiten Leitung (16) angeordneten Rückschlagventil (22) eine vierte Leitung (40) mit einem Druckbegrenzungsventil (42) abzweigt, wobei eine Steuerleitung (44) das Druckbegrenzungsventil (42) mit dem Umschaltventil (24) verbindet und/oder
- **dass** das Umschaltventil (24) einen mechanischen Stößel (46) aufweist, wobei der Arbeitskolben (10) so angeordnet ist, dass der Arbeitskolben (10) bei einem Zurückführen den Stößel (46) betätigt und das Umschaltventil (24) schließt.

2. Vorrichtung nach Anspruch 1,
**dadurch gekennzeichnet,**
**dass** das Hubvolumen (V_{A}) des Arbeitszylinders (12) mindestens doppelt so groß wie, insbesondere mehrfach so groß wie das Hubvolumen (Vp) des Pumpzylinders (8) ausgebildet ist.

3. Vorrichtung nach Anspruch 1 oder 2,
**dadurch gekennzeichnet,**
**dass** der Vorratsbehälter (4) einen durch mindestens ein Druckelement, insbesondere durch mindestens eine Druckfeder (30) oder durch einen Druckspeicher, vorgespannten Deckel (32) aufweist.

4. Vorrichtung nach einem der Ansprüche 1 bis 3,
**dadurch gekennzeichnet,**
**dass** der Arbeitskolben (10) im Arbeitszylinder (12) mittels einer Druckfeder (38) vorgespannt ist.

5. Vorrichtung nach einem der Ansprüche 1 bis 4,
**dadurch gekennzeichnet,**
**dass** die dritte Leitung (18) ein Drosselventil (48) aufweist.

6. Vorrichtung nach Anspruch 5,
**dadurch gekennzeichnet,**
- **dass** eine fünfte Leitung (50) zwischen dem Arbeitszylinder-seitigen Eingang des Drosselventils (48) und dem Pumpzylinder (8) vorgesehen ist und
- **dass** in der fünften Leitung (50) Mittel (52) zum Verhindern eines Rückflusses von Hydraulikflüssigkeit vom Pumpzylinder (8) in die dritte Leitung (18), insbesondere ein Rückschlagventil, vorgesehen sind.

7. Vorrichtung nach einem der Ansprüche 1 bis 6,
**dadurch gekennzeichnet,**
- **dass** der Pumpzylinder (8) in entgegengesetzter Richtung zum Arbeitszylinder (12) arbeitet.

8. Verfahren zum Übersetzen einer mechanischen Kraft zum Antreiben einer Pressvorrichtung für Pressfittings unter Verwendung einer Vorrichtung nach einem der Ansprüche 1 bis 7,
- bei dem mit einem Pumpzylinder in mehr als einem Hub eine Hydraulikflüssigkeit in einen Arbeitszylinder gepumpt wird,
- bei dem zwischen jeweils zwei Hüben des Pumpzylinders der Druck im Arbeitszylinder aufrecht gehalten wird und
- bei dem die Hydraulikflüssigkeit nach Erreichen eines Enddruckes innerhalb des Arbeitszylinders die Hydraulikflüssigkeit aus dem Arbeitszylinder abgelassen wird.

9. Verfahren nach Anspruch 8,
- bei dem die Hydraulikflüssigkeit gedrosselt abgelassen wird und
- bei dem der Druck der Hydraulikflüssigkeit kurz nach dem Beginn des Ablassens aus dem Arbeitszylinder für ein Abschalten des Erzeugens des Druckaufbaus im Pumpzylinder genutzt wird.

## Claims

1. Device for transmitting a mechanical force for driving a pressing device for press fittings
- having a storage container (4) for hydraulic fluid,
- having a pump cylinder (8) with a pump piston (6),
- having a working cylinder (12) with a working piston (10),
- having a first line (14) for connecting the storage container (4) to the pump cylinder (8),
- having a second line (16) for connecting the pump cylinder (8) to the working cylinder (12), and
- having a third line (18) for connecting the working cylinder (12) to the storage container (4),
- wherein means (20) for preventing a return flow of hydraulic fluid from the pump cylinder (8) into the storage container (4) are provided in the first line (14),
- wherein means (22) for preventing a return flow of hydraulic fluid from the working cylinder (12) into the pump cylinder (8) are provided in the second line (16),
- wherein switching means (24) for opening and closing the third line (18) are provided,
- wherein the piston displacement (VA) of the working cylinder (12) is configured to be greater than the piston displacement (Vp) of the pump cylinder (8),
- wherein the means for preventing a return flow in the first line (14) and in the second line (16) are designed as a non-return valve (20, 22), and
- wherein the switching means of the third line (18) are designed as a switching valve (24)
**characterized in that**
- a fourth line (40) with a pressure limiting valve (42) branches off in the direction of flow after the non-return valve (22) arranged in the second line (16), wherein a control line (44) connects the pressure limiting valve (42) to the switching valve (24), and/or
- wherein the switching valve (24) has a mechanical plunger (46), wherein the working piston (10) is arranged in such a way that the working piston (10), during a return stroke, actuates the plunger (46) and closes the switching valve (24).

2. Device according to Claim 1,
**characterized in that**
the piston displacement (VA) of the working cylinder (12) is at least twice as large, in particular several times as large, as the piston displacement (Vp) of the pump cylinder (8).

3. Device according to Claim 1 or 2,
**characterized in that**
the storage container (4) has a cover (32) pre-tensioned by at least one pressure element, in particular by at least one compression spring (30) or by a pressure accumulator.

4. Device according to any one of Claims 1 to 3,
**characterized in that**
the working piston (10) in the working cylinder (12) is pre-tensioned by means of a compression spring (38).

5. Device according to any one of Claims 1 to 4,
**characterized in that**
- the third line (18) has a throttle valve (48).

6. Device according to Claim 5,
**characterized in that**
- a fifth line (50) is provided between the input of the throttle valve (48) on the working cylinder side and the pump cylinder (8), and
- in the fifth line (50) means (52) are provided for preventing a return flow of hydraulic fluid from the pump cylinder (8) into the third line (18), in particular a non-return valve.

7. Device according to any one of Claims 1 to 6,
**characterized in that**
- the pump cylinder (8) operates in the opposite direction to the working cylinder (12).

8. Method for transmitting a mechanical force for driving a pressing device for press fittings using a device according to any of claims 1 to 7,
- wherein a hydraulic fluid is pumped into a working cylinder with a pump cylinder in more than one stroke,
- wherein the pressure in the working cylinder is maintained between two strokes of the pump cylinder in each case, and
- wherein the hydraulic fluid is discharged from the working cylinder after reaching an end pressure inside the working cylinder.

9. Method according to Claim 8,
- wherein the hydraulic fluid is discharged in a throttled manner, and
- wherein the pressure of the hydraulic fluid is used shortly after the start of the discharge from the working cylinder for switching off generation of the pressure build-up in the pump cylinder.

## Revendications

1. Dispositif de transmission d'une force mécanique pour entraîner un dispositif de pressage pour raccords à sertir,
- avec un réservoir (4) pour fluide hydraulique,
- avec un cylindre de pompe (8) ayant un piston de pompe (6),
- avec un cylindre de travail (12) ayant un piston de travail (10),
- avec une première conduite (14) pour raccorder le réservoir (4) au cylindre de pompe (8),
- avec une deuxième conduite (16) pour raccorder le cylindre de pompe (8) au cylindre de travail (12), et
- avec une troisième conduite (18) pour raccorder le cylindre de travail (12) au réservoir (4),
- où des moyens (20) pour empêcher un refoulement de fluide hydraulique du cylindre de pompe (8) dans le réservoir (4) sont prévus dans la première conduite (14),
- où des moyens (22) pour empêcher un reflux de fluide hydraulique du cylindre de travail (12) dans le cylindre de pompe (8) sont prévus dans la deuxième conduite (16),
- où des moyens de commutation (24) sont prévus pour ouvrir et fermer la troisième conduite (18),
- où le volume de course (V_{A}) du cylindre de travail (12) est supérieur au volume de course (V_{P}) du cylindre de pompe (8),
- où les moyens pour empêcher le reflux dans la première conduite (14) et dans la deuxième conduite (16) sont conçus comme un clapet anti-retour (20, 22) et
- où les moyens de commutation de la troisième conduite (18) sont conçus comme un clapet de commutation (24),
**caractérisé**
- **en ce qu'**une quatrième conduite (40) avec un clapet limiteur de pression (42) bifurque, dans la direction d'écoulement, en aval du clapet anti-retour (22) disposé dans la deuxième conduite (16), une conduite de commande (44) reliant le clapet limiteur de pression (42) au clapet de commutation (24), et/ou
- **en ce que** le clapet de commutation (24) présente un piston mécanique (46), le piston de travail (10) étant disposé de telle sorte que, lors d'un retour, le piston de travail (10) actionne le piston de retour (46) et ferme le clapet de commutation (24).

2. Dispositif selon la revendication 1,
**caractérisé**
**en ce que** le volume de course (V_{A}) du cylindre de travail (12) est au moins deux fois plus grand, en particulier plusieurs fois plus grand, que le volume de course (Vp) du cylindre de pompe (8).

3. Dispositif selon la revendication 1 ou 2,
**Caractérisé**
**en ce que** le réservoir (4) présente un couvercle (32) qui est précontraint par au moins un élément de pression, en particulier par au moins un ressort de pression (30) ou par un accumulateur de pression.

4. Dispositif selon l'une des revendications 1 à 3,
**caractérisé**
**en ce que** le piston de travail (10) est précontraint dans le cylindre de travail (12) au moyen d'un ressort de pression (38).

5. Dispositif selon l'une des revendications 1 à 4,
**caractérisé**
**en ce que** la troisième conduite (18) présente un étrangleur (48).

6. Dispositif selon la revendication 5,
**caractérisé**
- **en ce qu'**une cinquième conduite (50) est prévue entre l'entrée, côté cylindre de travail, de l'étrangleur (48) et le cylindre de pompe (8), et
- **en ce que** des moyens (52) sont prévus dans la cinquième conduite (50) pour empêcher un refoulement de fluide hydraulique du cylindre de pompe (8) vers la troisième conduite (18), en particulier un clapet anti-retour.

7. Dispositif selon l'une des revendications 1 à 6,
**caractérisé**
**en ce que** le cylindre de pompe (8) fonctionne dans la direction opposée au cylindre de travail (12).

8. Procédé de transmission d'une force mécanique pour entraîner un dispositif de pressage pour raccords à sertir en utilisant un dispositif selon l'une des revendications 1 à 7,
- dans lequel un fluide hydraulique est pompé dans un cylindre de travail par un cylindre de pompe en plus d'une course,
- dans laquelle la pression dans le cylindre de travail est maintenue entre deux courses du cylindre de la pompe, et
- dans laquelle le fluide hydraulique est vidangé du cylindre de travail après avoir atteint une pression finale à l'intérieur du cylindre de travail.

9. Procédé selon la revendication 8,
- dans lequel le fluide hydraulique est vidangé de façon ralentie et
- dans lequel la pression du fluide hydraulique est utilisée peu après le début de la vidange du cylindre de travail pour arrêter la génération de la montée en pression dans le cylindre de la pompe.
